# EUROPEAN PATENT APPLICATION

(11) **EP 3 513 899 A2**
(43) Date of publication of application: **24.07.2019**
(21) Application number: 18208880.7
(22) Date of filing: 28.11.2018
(51) Int. Cl.: B23K 31/12, B23K 9/10, B23K 9/095, G05B 19/418

(54) **SYSTEMS AND METHODS SUPPORTING WELD QUALITY ACROSS A MANUFACTURING ENVIRONMENT**

(30) Priority: 29.11.2017 US 201762592072 P; 11.09.2018 US 201816127473
(71) Applicant: Lincoln Global, Inc., Santa Fe Springs, CA 90670 (US)
(72) Inventor: Daniel, Joseph A., Sagamore Hills, OH Ohio 44067 (US)
(74) Representative: Grosse Schumacher Knauer von Hirschhausen

(57) **Abstract**

Embodiments of systems (200, 300) and methods for supporting weld quality across a manufacturing environment are disclosed. One embodiment includes manufacturing cells (10, 210, 310, 900) within a manufacturing environment, where each manufacturing cell (10, 210, 310, 900) includes a cell controller (76) and welding equipment. A communication network (230, 330) supports data communications between a central controller (220, 320) and the cell controller (76) of each of the manufacturing cells (10, 210, 310, 900). The central controller (220, 320) collects actual weld parameter data from the cell controller of each manufacturing cell, via the communication network (230, 330), to form aggregated weld parameter data for a same type of workpiece (22, 24) being welded in each of the manufacturing cells (10, 210, 310, 900). The central controller (220, 320) analyzes the aggregated weld parameter data to generate updated weld settings. The updated weld settings are communicated from the central controller (220, 320) to the cell controller (76) of each of the manufacturing cells (10, 210, 310, 900) via the communication network (230, 330).

## Description

This U.S. Patent Application claims priority to and the benefit of U.S. Provisional Patent Application Serial No. 62/592,072, filed on November 29, 2017, the disclosure of which is incorporated herein by reference in its entirety. U.S. Patent No. 9,937,577, issued on April 10, 2018, is incorporated herein by reference in its entirety.

### FIELD OF THE INVENTION

The invention is related to a system supporting weld quality across a manufacturing environment according to claim 1 and to a manufacturing cell supporting welding of a sequence of welds to manufacture a workpiece according to claim 9. Embodiments of the present invention relate to supporting weld quality (e.g., weld quality correction and validation) across multiple manufacturing cells of a manufacturing environment.

### TECHNICAL BACKGROUND

When welding workpieces of the same type across many manufacturing cells within a manufacturing environment, it can be challenging to maintain a consistent quality of those welded workpieces across the manufacturing cells. Over time, weld settings of the various welding equipment within the manufacturing cells can get changed and become very divergent from one cell to the next. As a result, the quality of a same type of welded workpiece can become divergent from one cell to the next. However, it is desirable to maintain a consistent "good" quality of workpieces across the manufacturing environment.

### DESCRIPTION

In order to improve, especially constant or consistent, quality in welding, a system supporting weld quality across a manufacturing environment according to claim 1 is described and a manufacturing cell supporting welding of a sequence of welds to manufacture a workpiece according to claim 9. Preferred embodiments are subject of the subclaims. Embodiments of the present invention include systems and methods related to supporting weld quality across a manufacturing environment.

One embodiment includes a system supporting weld quality across a manufacturing environment. The system includes multiple manufacturing cells within a manufacturing environment. Each manufacturing cell of the multiple manufacturing cells includes a cell controller and welding equipment. The manufacturing cells may be robotic manufacturing cells or non-robotic manufacturing cells (e.g., semi-automatic or manual). The system also includes a central controller and a communication network operatively connected to the central controller and the multiple manufacturing cells. The communication network is configured to support data communications (e.g., wired and/or wireless communications) between the central controller and the cell controller of each of the multiple manufacturing cells. The central controller is configured to collect actual weld parameter data from the cell controller of each of the multiple manufacturing cells, via the communication network, to form aggregated weld parameter data for a same type of workpiece being welded in each of the multiple manufacturing cells. The actual weld parameter data include values and ranges of actual welding parameters used by the welding equipment in each of the multiple manufacturing cells to weld the same type of workpiece. The central controller is also configured to analyze the aggregated weld parameter data to generate updated weld settings for the same type of workpiece being welded in each of the multiple manufacturing cells. The central controller is further configured to communicate the updated weld settings to the cell controller of each of the multiple manufacturing cells via the communication network. In one embodiment, the welding equipment of each of the multiple manufacturing cells is configured to communicate the actual weld parameter data to the cell controller, receive the updated weld settings from the cell controller, and use the updated weld settings for subsequent welding of the same type of workpiece. The actual weld parameter data and the updated weld settings may include values and ranges of, for example, a welding voltage, a welding current, an arc travel speed, a wire feed speed, a wire electrode stick out distance, and a welding waveform. At least a portion of the actual weld parameter data may be stored in a memory of the welding equipment of each manufacturing cell of the multiple manufacturing cells as operator-selected weld parameter data. In accordance with one embodiment, the system includes at least one sensor, in each manufacturing cell of the multiple manufacturing cells, configured to sense at least one of the actual welding parameters used to weld the same type of workpiece. The sensor may include, for example, a voltage sensor configured to sense a welding voltage, a current sensor configured to sense a welding current, a motion sensor configured to sense an arc travel speed, a speed sensor configured to sense a wire feed speed, a visual sensor configured to sense an electrode stick out distance, or a flow sensor configured to sense a gas flow.

One embodiment includes a manufacturing cell supporting welding of a sequence of welds to manufacture a workpiece. The manufacturing cell includes robotic welding equipment configured to make robotic welds as at least a portion of manufacturing a workpiece, and non-robotic welding equipment configured to allow a human operator to make non-robotic (e.g., manual or semi-automatic) welds as at least a portion of manufacturing the workpiece. The manufacturing cell also includes a weld sequence controller configured to control timing associated with making the robotic welds and the non-robotic welds as a sequence of welds to manufacture the workpiece. In accordance with one embodiment, the timing and the sequence of welds is predetermined and fixed before welding begins. Locations of the non-robotic welds to be made to manufacture the workpiece cannot be reached by the robotic welding equipment, in accordance with one embodiment. In one embodiment, the weld sequence controller is configured to adapt at least one of a position and timing of a subsequent weld to be made in the sequence of welds, while manufacturing the workpiece, based on a condition of a previous weld of the sequence of welds. In one embodiment, the weld sequence controller is configured to adapt the sequence of welds, while manufacturing the workpiece, by adding a non-robotic weld as a next weld to be made when an immediate previous weld in the sequence of welds is a robotic weld that was missed by the robotic welding equipment. The location on the workpiece of the next weld to be made, non-robotically, is the same as the location of the immediate previous weld. In one embodiment, the weld sequence controller is configured to determine if an immediate previous weld made, of the sequence of welds, is defective based on at least one quality parameter of the immediate previous weld made. In one embodiment, the weld sequence controller is configured to adapt the sequence of welds, while manufacturing the workpiece, by adding a non-robotic weld as a next weld to be made when an immediate previous weld in the sequence of welds is a robotic weld that was determined to be defective. The location on the workpiece of the next weld to be made, non-robotically, is the same as the location of the immediate previous weld. In one embodiment, the manufacturing cell includes at least one sensor associated with at least one weld of the sequence of welds. The sensor is configured to sense at least one quality parameter associated with generating at least one weld and report the quality parameter, directly or indirectly, to the weld sequence controller. A sensor may include, for example, a visual spectrum sensor, a radiographic sensor, a laser sensor, an electromagnetic sensor, an infrared sensor, a temperature sensor, a spectrometer sensor, or an ultrasonic sensor. A quality parameter may be related to, for example, a weld position on the workpiece, a weld bead size, a weld bead shape, weld penetration, weld fusion, weld porosity, weld cracking, weld inclusion, a weld discontinuity, an arc plasma type, or an arc plasma temperature.

Numerous aspects of the general inventive concepts will become readily apparent from the following detailed description of exemplary embodiments, from the claims, and from the accompanying drawings.

### BRIEF DESCRIPTION OF THE DRAWINGS

The accompanying drawings, which are incorporated in and constitute a part of the specification, illustrate various embodiments of the disclosure. It will be appreciated that the illustrated element boundaries (e.g., boxes, groups of boxes, or other shapes) in the figures represent one embodiment of boundaries. In some embodiments, one element may be designed as multiple elements or multiple elements may be designed as one element. In some embodiments, an element shown as an internal component of another element may be implemented as an external component and vice versa. Furthermore, elements may not be drawn to scale.
FIG. 1 illustrates one embodiment of a manufacturing cell for manufacturing a workpiece within a manufacturing environment;
FIG. 2 illustrates one embodiment of a system supporting weld quality across a manufacturing environment having a plurality of manufacturing cells that are in wired communication with a central controller via a communication network;
FIG. 3 illustrates one embodiment of a system supporting weld quality across a manufacturing environment having a plurality of manufacturing cells that are in wireless communication with a central controller via a communication network;
FIG. 4 illustrates one embodiment of a manufacturing cell communicating weld parameter data to a central controller;
FIG. 5 illustrates one embodiment of a central controller communicating updated weld settings to a manufacturing cell;
FIGS. 6A, 6B, and 6C illustrate embodiments of three types of data analysis that may be performed by a central controller;
FIG. 7 illustrates example embodiments of sensors for monitoring actual welding parameters within manufacturing cells of a manufacturing environment;
FIG. 8 illustrates a flow chart of one embodiment of a method to support weld quality across a manufacturing environment;
FIG. 9 illustrates another embodiment of a manufacturing cell for manufacturing a workpiece within a manufacturing environment;
FIG. 10 illustrates a flow chart of one embodiment of a method to support welding a sequence of welds within a manufacturing cell;
FIG. 11 illustrates example embodiments of sensors for monitoring quality parameters of a sequence of welds that are made when manufacturing a workpiece within a manufacturing cell; and
FIG. 12 illustrates an example embodiment of a controller (e.g., a central controller, a cell controller, or a weld sequence controller used in the systems described herein).

### DETAILED DESCRIPTION

Embodiments of systems and methods for supporting weld quality are disclosed. For example, weld parameter data may be observed across all manufacturing cells (an entire factory/installed base), analyzed, and pushed back to individual manufacturing cells as updated weld settings, providing the basis of quality improvement with a larger group of machines from which to learn which settings make quality ("good") welds on a particular type of workpiece (this is different than just one machine setting limits). Such a larger data set provides a more robust set of weld parameter data to determine weld settings which produce quality welds.

One embodiment includes multiple manufacturing cells within a manufacturing environment, where each manufacturing cell includes a cell controller and welding equipment. A communication network supports data communications between a central controller and the cell controller of each of the manufacturing cells. The central controller collects actual weld parameter data from the cell controller of each of the manufacturing cells, via the communication network. The actual weld parameter data include values and ranges of actual welding parameters used by the welding equipment in each of the multiple manufacturing cells to weld the same type of workpiece. The central controller aggregates and analyzes the weld parameter data collected from across the manufacturing cells to generate updated weld settings for the same type of workpiece being welded in each of the manufacturing cells. The updated weld settings are communicated to the cell controller of each of the manufacturing cells via the communication network to be used by the respective welding equipment.

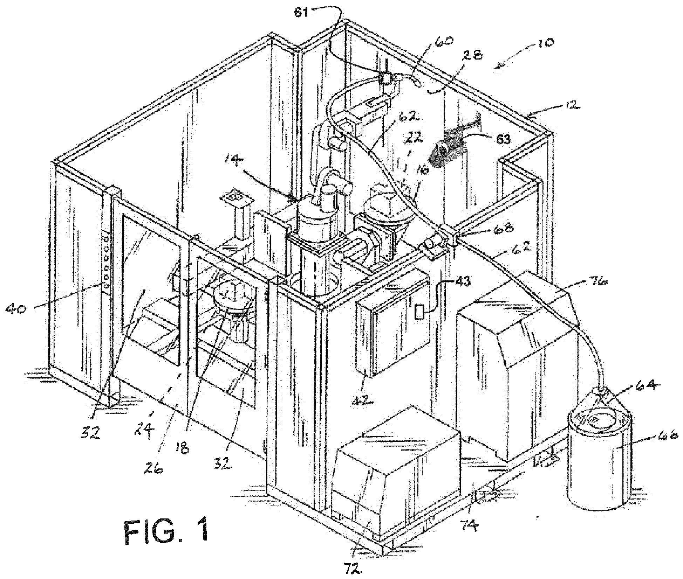

The examples and figures herein are illustrative only and are not meant to limit the subject invention, which is measured by the scope and spirit of the claims. Referring now to the drawings, wherein the showings are for the purpose of illustrating exemplary embodiments of the subject invention only and not for the purpose of limiting same, FIG. 1 illustrates one embodiment of a manufacturing cell 10 for manufacturing a workpiece within a manufacturing environment. The manufacturing cell 10 is discussed in detail herein with respect to being configured with welding equipment. The welding equipment may be robotic welding equipment, non-robotic welding equipment (e.g., semi-automatic or manual), or some combination thereof. It is envisioned that a manufacturing cell may be used to weld a workpiece by a process such as, for example, gas metal arc welding (GMAW), flux-cored arc welding (FCAW), or gas tungsten arc welding (GTAW). Other processes for welding are possible as well, in accordance with other embodiments.

With reference to FIG. 1, the manufacturing cell 10 is a welding manufacturing cell and generally includes a frame 12, a robot 14 disposed within the frame, and first and second welding tables 16 and 18, respectively, also disposed within the frame. The manufacturing cell 10 is useful for welding work pieces (parts) 22 and 24. In the depicted embodiment of FIG. 1, the frame 12 includes a plurality of side walls and doors to enclose the robot 14 and the welding tables 16 and 18. Even though a substantially rectangular configuration in plan view is shown, the frame 12, and the cell 10, can take numerous configurations.

A front access door 26 mounts to the frame 12 to provide access to the interior of the frame. The front access door 26 can take a bi-fold configuration where the door includes two hinge sets: a first hinge set attaching the door 26 to the frame 12 and a second hinge set attaching one panel of the door to another panel. Nevertheless, the front access door 26 can take other configurations such as a sliding door or a swinging door. Similarly, a rear access door 28 also mounts to the frame 12. The rear access door 28 in the depicted embodiment also takes a bi-fold configuration; however, the rear access door can take other configurations such as those discussed with reference to the front access door 26. Windows 32 can be provided on either door (only depicted on front door 26). The windows can include a tinted safety screen, for example.

A control panel 40 is provided on the frame 12 adjacent the front door 26. Control knobs and/or switches provided on the control panel 40 communicate with controls housed in a controls enclosure 42 that is also mounted to the frame 12. The controls on the control panel 40 can be used to control operations performed in the manufacturing cell 10 in a similar manner to controls used with known manufacturing cells.

In one embodiment, the robot 14 mounts on a pedestal that mounts on a support. The robot 14 in the depicted embodiment is centered with respect to the welding tables 16 and 18 and includes multiple axes of movement. If desired, the pedestal can rotate with respect to the support similar to a turret. Accordingly, some sort of drive mechanism, e.g. a motor and transmission (not shown), can be housed in the pedestal and/or the support for rotating the robot 14. In accordance with another embodiment, the pedestal is replaced with a positioner that holds and re-positions the workpiece (e.g., via rotation and/or changing elevation of the workpiece) for welding a sequence of welds, for example.

In one embodiment, a welding gun 60 attaches to a distal end of an arm of the robot 14. The welding gun 60 can be similar to those that are known in the art. A flexible tube or conduit 62 attaches to the welding gun 60. Consumable welding electrode wire 64, which can be stored in a container 66, is delivered to the welding gun 60 through the conduit 62. A wire feeder 68 attaches to the frame 12 to facilitate the delivery of consumable welding wire 64 to the welding gun 60. Even though the robot 14 is shown mounted to a base or lower portion of the frame 12, if desired, the robot 14 can mount to an upper structure of the frame and depend downwardly into the manufacturing cell 10. In one embodiment, a welding power source 72 for the welding operation mounts to and rests on a platform 74 that is connected to and can be a part of the frame 12.

In the embodiment of FIG. 1, a sensor 61 is mounted proximate the welding gun 60. For example, in accordance with one embodiment, the sensor 61 is a voltage sensor configured to sense a welding voltage (one type of welding parameter) during a welding operation. In other embodiments, the sensor 61 may be a different type of sensor, possibly mounted elsewhere within the manufacturing cell 10. For example, the sensor 61 may be a current sensor for sensing a welding current, a motion sensor (e.g., having an accelerometer) for sensing a travel speed of the welding gun 60 (and the arc produced by the welding gun 60), a speed sensor (e.g., a motor with an RPM output on the wire feeder 68) for sensing a wire feed speed, a visual sensor (e.g., a camera) configured to sense an electrode stick out distance, or a flow sensor for sensing a gas flow (e.g., a rate of flow of a shielding gas). In general, multiple sensors can be employed throughout the manufacturing cell to sense actual welding parameters during a welding operation. The welding parameters sensed by the sensors may be communicated (e.g., wired or wirelessly) to a welding power source and/or a controller of the manufacturing cell 10. Sensor fusion or data fusion techniques may be employed, in accordance with some embodiments, to combine data from two or more sensors to generate weld parameter data associated with a welding operation on a workpiece. Furthermore, weld parameter data can include data representative of welding parameters that were selected by a human operator, stored in a memory of the welding equipment (e.g., a memory 43 within the controls enclosure 42), and actually used by the welding equipment to make welds on a workpiece.

In FIG. 1, another sensor 63 is mounted near a workpiece 22 to observe a quality parameter of welds created on the workpiece 22. In accordance with one embodiment, the sensor 63 is configured to observe welds created on the workpiece 22. For example, the sensor 63 may be a visual spectrum sensor (e.g., a camera), a radiographic sensor, a laser sensor, an electromagnetic sensor, an infrared sensor, a temperature sensor, a spectrometer sensor, or an ultrasonic sensor. The quality parameter may be related to, for example, a weld position on the workpiece/part 22, a weld bead size, a weld bead shape, weld penetration, weld fusion, weld porosity, weld cracking, weld inclusion, a weld discontinuity, an arc plasma type, or an arc plasma temperature. Such sensing can be accomplished during welding and/or after welding, in accordance with various embodiments. Sensor fusion or data fusion techniques may be employed, in accordance with some embodiments, to combine data from two or more sensors to generate quality parameter data associated with a weld. Furthermore, in one embodiment, a user interface is provided for an operator to easily change weld settings. For example, a user may change one or more weld settings associated with welding a particular weld on a workpiece such that a higher quality weld is created. The user interface may be, for example, the control panel 40, in accordance with one embodiment.

A cell controller 76 communicates with and controls various portions of the welding equipment of the manufacturing cell 10 (including the robot 14), and rests and mounts on the platform 74. For example, the cell controller 76 can communicate with the controls in the controls enclosure 42 and the power source 72, in accordance with one embodiment. The cell controller 76 is also configured to communicate with an external central controller, as discussed later herein. In one embodiment, the cell controller 76 and, for example, welding equipment (e.g., the welding power source 72) may communicate with each other (exchange data). The welding equipment may communicate actual weld parameter data to the cell controller 76 and the cell controller 76 may provide updated weld settings to the welding equipment, in accordance with one embodiment. The cell controller 76 may gather data from many different devices (robot, power supply, control enclosure, tooling, sensors, etc.) of the manufacturing cell in a wired and/or wireless manner, in accordance with various embodiments.

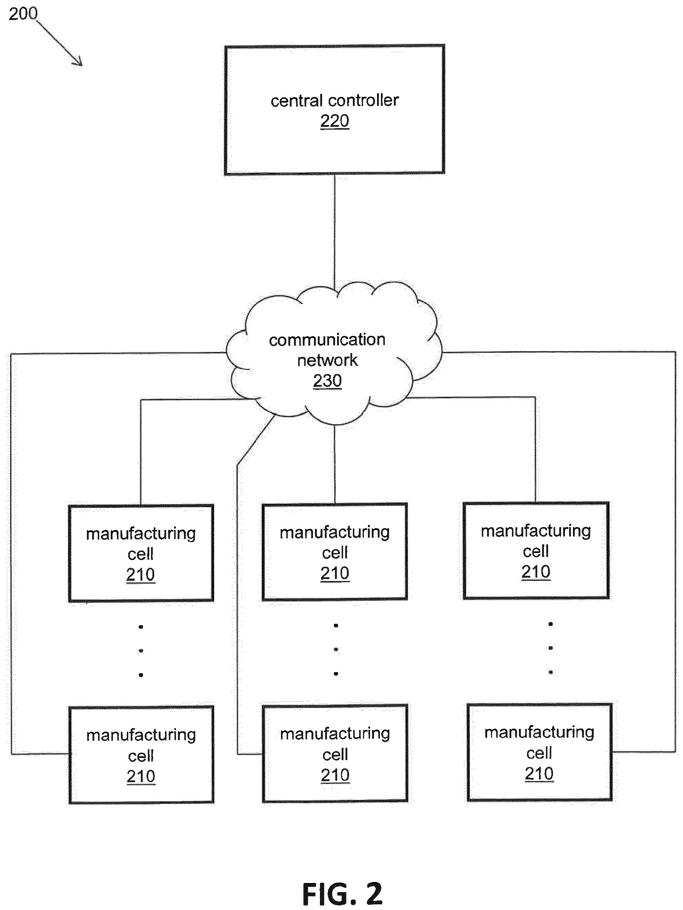

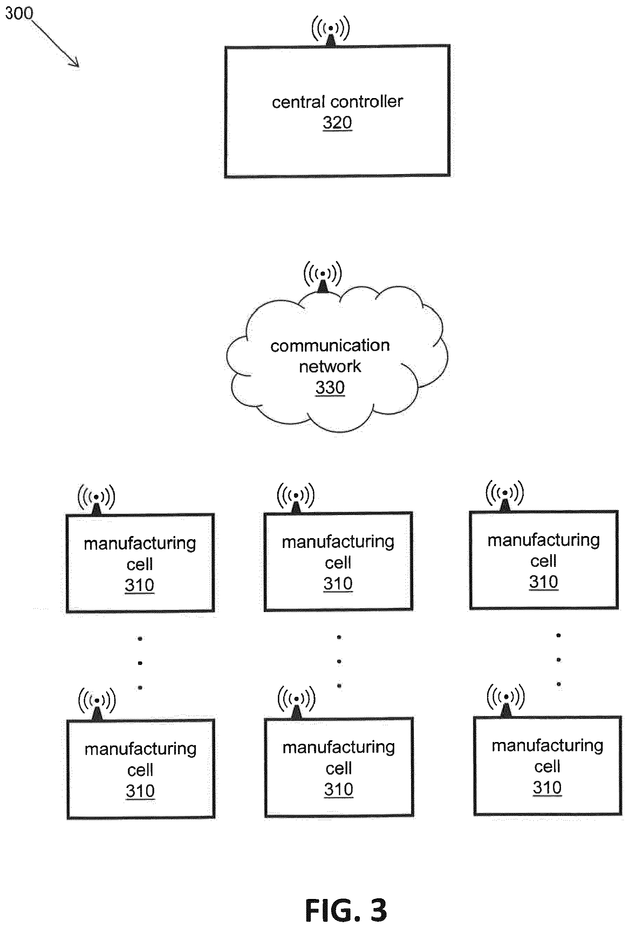

FIG. 2 illustrates one embodiment of a system 200 supporting weld quality across a manufacturing environment having a plurality of manufacturing cells 210 that are in wired communication with a central controller 220 via a communication network 230. For example, each of the manufacturing cells 210 may be similar to the manufacturing cell 10 of FIG. 1 supporting welding equipment and having a cell controller (e.g., similar to cell controller 76 of FIG. 1). In the embodiment of FIG. 2, communication between the manufacturing cells 210 and the central controller 220 via the communication network 230 is accomplished via wired communications (e.g., copper wire or fiber optics). Similarly, FIG. 3 illustrates one embodiment of a system 300 supporting weld quality across a manufacturing environment having a plurality of manufacturing cells 310 that are in wireless communication with a central controller 320 via a communication network 330. Embodiments of systems having combinations of wired and wireless communications are also possible as well. In one embodiment, the manufacturing cells 210 and/or 310 are robotic manufacturing cells. In another embodiment, the manufacturing cells 210 and/or 310 are non-robotic (e.g., semi-automatic or manual) manufacturing cells operated by a human user to generate welds on a workpiece/part. In still another embodiment, the manufacturing cells 210 and/or 310 include both robotic and non-robotic welding equipment.

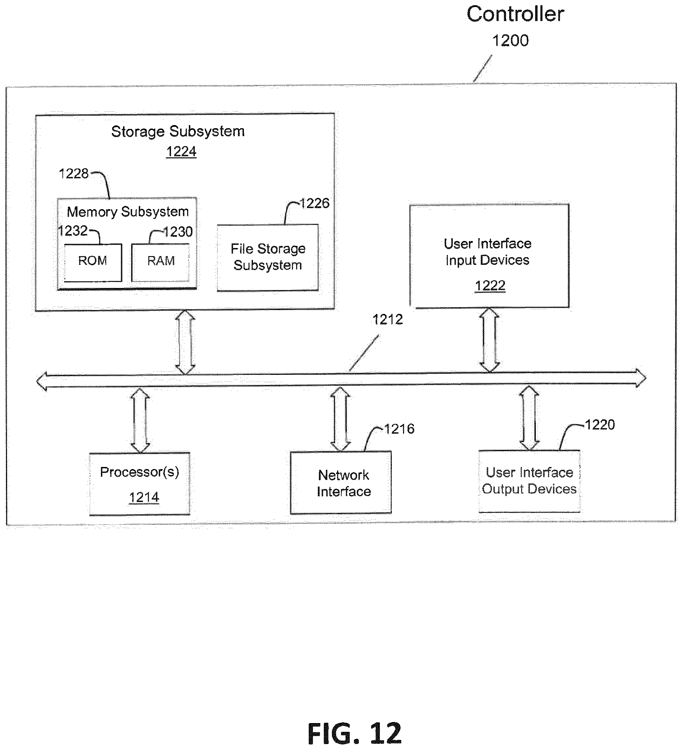

Referring again to FIG. 2 and FIG. 3, in accordance with one embodiment, each manufacturing cell 210 (or 310) includes a cell controller (e.g., similar to the cell controller 76 of FIG. 1). Each cell controller and the central controller 220 (or 320) may share one or more characteristics with the controller 1200 of FIG. 12 (discussed later herein). The communication network 230 (or 330) may be configured as, for example, a local area network, a wide area network, the internet, or some combination thereof and may include, for example, a server computer, a network storage device, a wireless router, a modem, or some combination thereof, in accordance with various embodiments. The cell controller of each manufacturing cell 210 (or 310) is configured to communicate with the central controller 220 (or 320) via the communication network 230 (or 330).

In a simple (minimal) embodiment, the communication network 230 may be configured as, for example, digital communication cables (e.g., copper or fiber optic) connected between digital communication circuits at the central controller 220 and at the manufacturing cells 210. The digital communication circuits are configured to send and receive digital data between the central controller 220 and the manufacturing cells 210 over the digital communication cables. Also, in a simple (minimal) embodiment, the wireless communication network 330 may be configured as, for example, radio frequency antennas connected to wireless digital communication circuits at the central controller 320 and at the manufacturing cells 310. The wireless digital communication circuits are configured to transmit and receive radio frequency signals (e.g., WiFi signals) encoded with digital data between the central controller 320 and the manufacturing cells 310 via the antennas. Therefore, in accordance with various embodiments, the communication network 230 (and 330) may have elements located away from the central controller 220 (and 320) and the manufacturing cells 210 (and 310) and/or at the central controller 220 (and 320) and the manufacturing cells 210 (and 310).

A cell controller (e.g., cell controller 76 of FIG. 1) of a manufacturing cell acts as a communication hub for the manufacturing cell and gathers all of the actual weld parameter data for that manufacturing cell. The central controller 220 (or 320) collects actual weld parameter data from the manufacturing cells 210 (or 310) across the manufacturing environment over time to form aggregated weld parameter data for a same type of workpiece being welded in each of the multiple manufacturing cells across the manufacturing environment. The actual weld parameter data include values and ranges of actual welding parameters (sensed and/or user-selected) used by the welding equipment in each of the multiple manufacturing cells to weld the same type of workpiece. The actual welding parameters may include, for example, a welding voltage, a welding current, travel speed, wire feed speed, electrode stick out distance, and gas flow rate. The values of the actual welding parameters may be the same or different from weld to weld on a workpiece, in accordance with various embodiments. Therefore, in accordance with one embodiment, the aggregated weld parameter data is sorted by specific weld locations on a particular workpiece type.

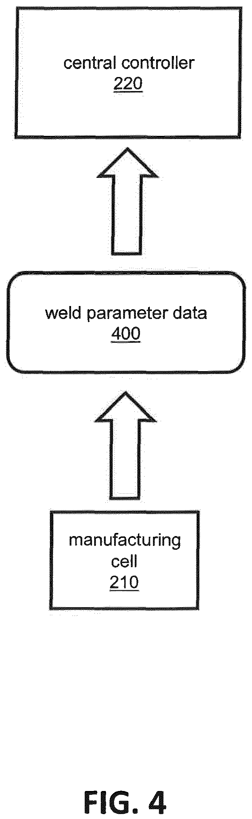

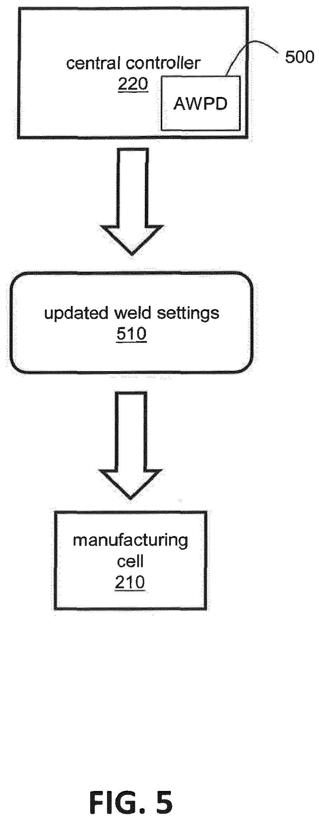

FIG. 4 illustrates one embodiment of a manufacturing cell 210 communicating weld parameter data 400 to a central controller 220 as the central controller 220 collects weld parameter data from multiple manufacturing cells across the manufacturing environment. FIG. 5 illustrates one embodiment of the central controller 220 communicating updated weld settings 510 to a manufacturing cell 210. Referring to FIG. 4 and FIG. 5, the central controller 220 collects the weld parameter data 400 from the multiple cells to form aggregated weld parameter data (AWPD) 500. The central controller 220 analyzes the aggregated weld parameter data (AWPD) 500 and generates updated weld settings 510 which are communicated to each of the multiple manufacturing cells 210 within the manufacturing environment. Similar to the actual welding parameters, the updated weld settings may include selectable settings of values and ranges for a welding voltage, a welding current, travel speed, wire feed speed, electrode stick out distance, and gas flow rate, for example. The updated weld settings may be the same or may be different for each weld to be made on a particular type of workpiece, depending on the nature of the welds to be made.

In accordance with one embodiment, it is assumed that the aggregated weld parameter data is representative of actual welding parameters that were used to make "good" quality welds on the same type of workpiece across the manufacturing environment. In accordance with another embodiment, the collected weld parameter data is tagged as being from a "good" quality weld or not, for example. In this manner, the resultant updated weld settings 510 should be representative of values and ranges of weld settings that will produce "good" quality welds.

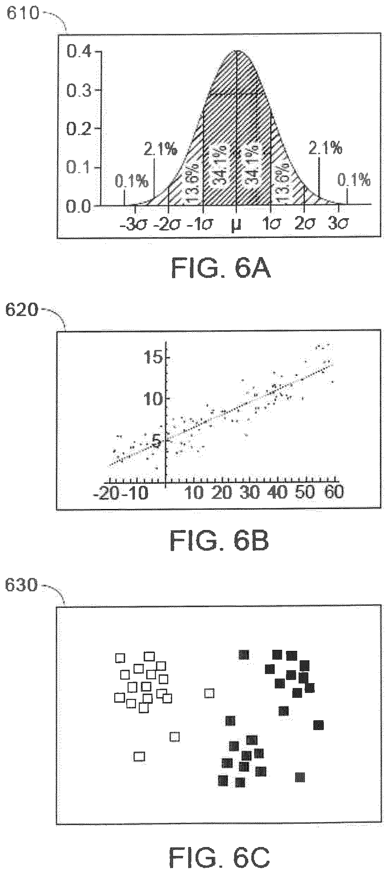

FIGS. 6A, 6B, and 6C illustrate embodiments of three types of data analysis that may be performed by a central controller on aggregated weld parameter data (AWPD) to generate updated weld settings. The first type of analysis 610 is statistical analysis. For example, in one embodiment, a mean and a standard deviation of actual weld parameter data (collected across the manufacturing environment for a particular actual welding parameter used to make a particular weld on a same type of workpiece in manufacturing cells across the manufacturing environment) are calculated using statistical techniques. The mean and standard deviation are then used to generate an updated value and range (settings) for the particular welding parameter. The second type of analysis 620 is regression analysis and the third type of analysis 630 is cluster analysis. In a similar manner, calculated characteristics resulting from the regression analysis or the cluster analysis may be used to generate an updated value and range (settings) for a particular welding parameter. Other types of analyses may be possible as well, in accordance with other embodiments.

The updated weld settings, for each welding parameter, are communicated from the central controller to the cell controller of each of the manufacturing cells in the manufacturing environment via the communication network. In one embodiment, each cell controller communicates the updated weld settings to the welding equipment in each respective manufacturing cell, and the welding equipment uses the updated weld settings (e.g., stored in a memory of the welding equipment) to make subsequent welds on workpieces of the same type of workpiece. For example, in a non-robotic situation, the user is presented with the selectable values and ranges of the updated weld settings to perform a welding operation to create a particular weld on the same type of workpiece. The user makes a selection from the updated weld settings. In a robotic situation, the cell controller of the manufacturing cell limits the robotic welding equipment to using only those welding parameters defined by the updated weld settings for performing a welding operation to create a particular weld on the same type of workpiece. In this manner, by using the updated weld settings which are based on the actual welding parameters previously used to produce "good" quality welds across the manufacturing environment, subsequent welds produced on the same type of workpiece should have a better chance of being of "good" quality, and consistent quality should be maintained across the manufacturing environment. The updated weld settings prevent a user and/or a robotic system from using weld settings that deviate from the values and ranges of the updated weld settings, which would possibly result in "poor" quality welds.

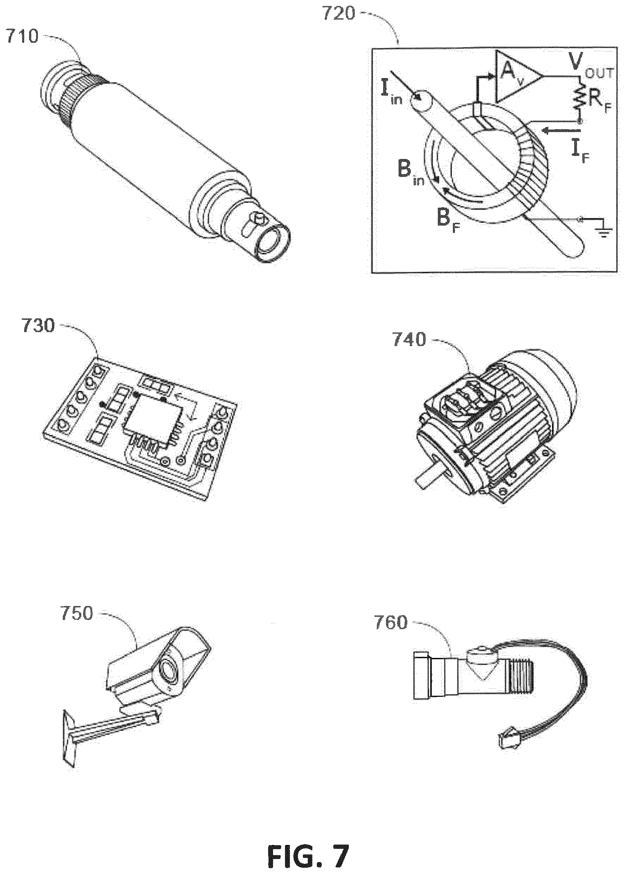

FIG. 7 illustrates example embodiments of sensors for monitoring actual welding parameters within manufacturing cells of a manufacturing environment (e.g., as sensor 61 of FIG. 1). The sensors may be of different types mounted at various places within a manufacturing cell or within equipment of a manufacturing cell. For example, in accordance with one embodiment and referring to FIG. 7, a voltage sensor 710 is configured to sense a welding voltage (one type of welding parameter) during a welding operation. Furthermore, a current sensor 720 is configured to sense a welding current, a motion sensor 730 (e.g., having an accelerometer) is configured to sense a travel speed of a welding gun (and the arc produced by the welding gun), a speed sensor 740 (e.g., having a motor with an RPM output on a wire feeder) is configured to sense a wire feed speed, a visual sensor 750 (e.g., a camera) is configured to sense an electrode stick out distance, and a flow sensor 760 is configured to sense a gas flow (e.g., a rate of flow of a shielding gas). In general, multiple sensors of various types can be employed throughout a manufacturing cell to sense actual welding parameters. Such sensing can be accomplished during a welding operation. The welding parameters sensed by the sensors may be communicated (e.g., wired or wirelessly) to a welding power source and/or a cell controller of the manufacturing cell. Sensor fusion or data fusion techniques may be employed (e.g., in a cell controller or in a central controller), in accordance with some embodiments, to combine data from two or more sensors to generate weld parameter data associated with a welding operation on a workpiece.

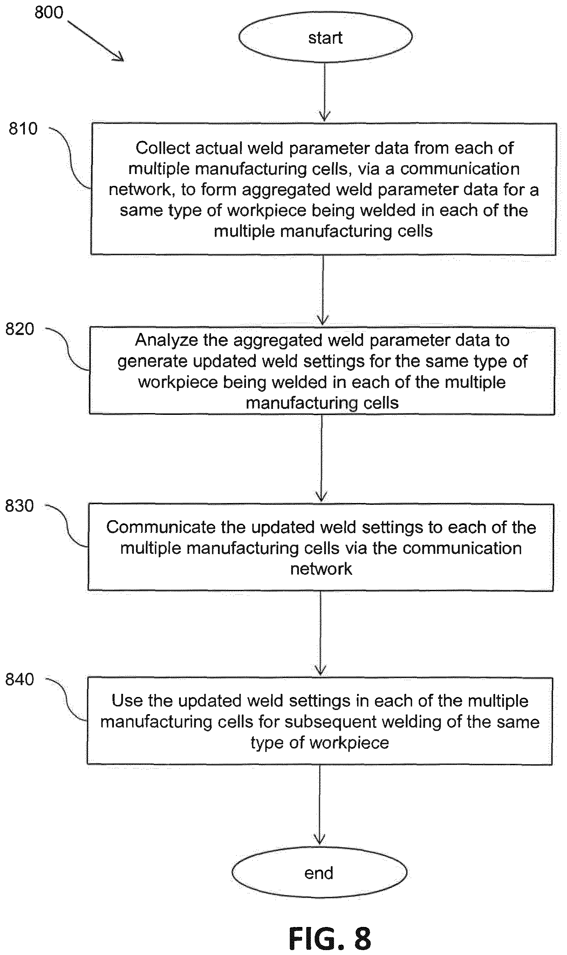

FIG. 8 illustrates a flow chart of one embodiment of a method 800 to support weld quality across a manufacturing environment. The method 800 includes, at block 810, collecting actual weld parameter data from each of multiple manufacturing cells across a manufacturing environment, via a communication network, to form aggregated weld parameter data for a same type of workpiece being welded in each of the multiple manufacturing cells. The actual weld parameter data include value and ranges of actual welding parameters (sensed and/or user-selected) such as, for example, welding voltage, welding current, travel speed, wire feed speed, electrode stick out distance, and gas flow rate used by welding equipment in each of the multiple manufacturing cells to weld the same type of workpiece. At block 820, the aggregated weld parameter data is analyzed to generate updated weld settings for the same type of workpiece being welded in each of the multiple manufacturing cells. The updated weld settings include values and ranges of, for example, welding voltage, welding current, travel speed, wire feed speed, electrode stick out distance, and gas flow rate. At block 830, the updated weld settings are communicated to each of the multiple manufacturing cells across the manufacturing environment via the communication network. For example, in accordance with one embodiment, the central controller communicates the updated weld settings to each of the cell controllers of the multiple manufacturing cells, and each cell controller communicates the updated weld settings to the respective welding equipment of the respective manufacturing cell.

At block 840, the updated weld settings are stored and programmed to be used in each of the multiple manufacturing cells by the welding equipment for subsequent welding of the same type of workpiece. For example, in a non-robotic situation, the user is presented with the selectable values and ranges of the updated weld settings to perform a welding operation to create a particular weld on the same type of workpiece. In a robotic situation, the cell controller of the manufacturing cell limits the robotic welding equipment to using only those weld parameters defined by the updated weld settings for performing a welding operation to create a particular weld on the same type of workpiece. In this manner, by using the updated weld settings which are based on the actual welding parameters previously used to produce "good" quality welds across the manufacturing environment, subsequent welds produced on the same type of workpiece should have a better chance of being of "good" quality, and consistent quality should be maintained across the manufacturing environment.

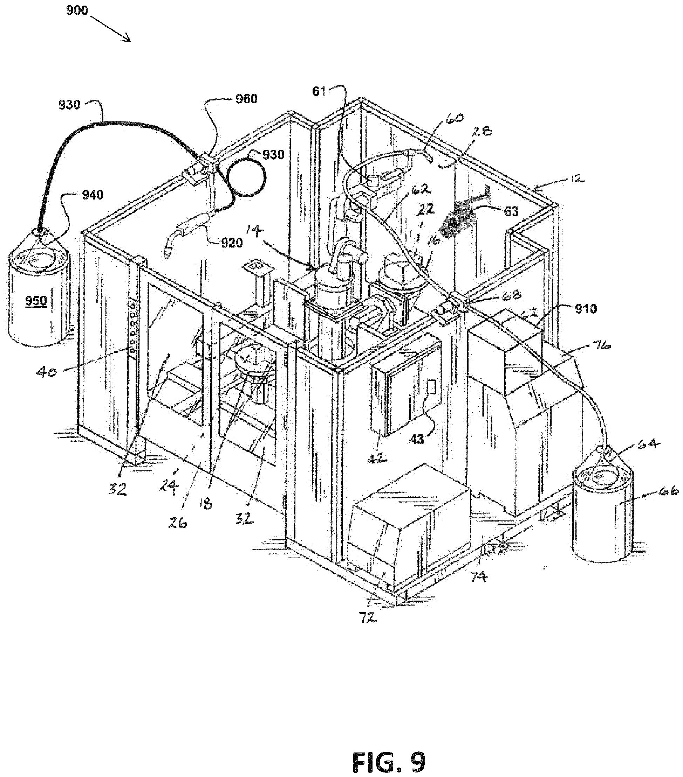

FIG. 9 illustrates another embodiment of a manufacturing cell 900 for manufacturing a workpiece within a manufacturing environment. The manufacturing cell 900 is similar to the manufacturing cell 10 of FIG. 1. However, the manufacturing cell 900 also includes a weld sequence controller (or welding job sequencer) 910. In another embodiment, the weld sequence controller 910 is part of the cell controller 76. The weld sequence controller 910 may share one or more characteristics with the controller 1200 of FIG. 12 discussed later herein. The manufacturing cell 900 also includes non-robotic welding equipment (e.g., for a human welder to perform semi-automatic welding) which includes a welding gun 920 which can be similar to those that are known in the art. A flexible tube or conduit 930 attaches to the welding gun 920. Consumable welding electrode wire 940, which can be stored in a container 950, is delivered to the welding gun 920 through the conduit 930. A wire feeder 960 attaches to the frame 12 to facilitate the delivery of consumable welding wire 940 to the welding gun 920.

In an alternative embodiment, the welding gun 920 is replaced with a stick electrode holder (not shown) configured for use in stick welding (a type of non-robotic welding performed by a human welder). In accordance with another embodiment, instead of the manufacturing cell 900 having both the welding gun 60 for robotic welding and the welding gun 920 for non-robotic welding, the welding gun 60 can be detached from the robot 14 and connected to the wire feeder 960 to perform non-robotic welding. The same welding power source 72 can support both robotic welding and non-robotic welding, in accordance with one embodiment. In an alternative embodiment, the welding power source 72 supports robotic welding and an additional welding power source (not shown) supports non-robotic welding (e.g., stick welding or semi-automatic welding performed by a human welder).

In the manufacturing cell 900, the robotic welding equipment is configured to make robotic welds as at least a portion of manufacturing a workpiece. The non-robotic welding equipment is configured to allow a human operator (welder) to make non-robotic welds as at least another portion of manufacturing the workpiece. The weld sequence controller 910 is configured to control the order and timing associated with making the robotic welds and the non-robotic welds as a sequence of welds to manufacture the workpiece. The general concept of weld sequencing is described in U.S. Patent No. 9,937,577 which is incorporated herein by reference in its entirety. However, as further described herein, weld sequencing can include a sequence of welds that includes both robotic and non-robotic welds. Furthermore, as described herein, the sequence of welds may be adaptable based on one or more conditions of a weld.

In accordance with one embodiment, the timing and the order of the sequence of welds is predetermined and fixed before welding begins. It may be assumed, in one embodiment, that locations of non-robotic welds to be made on a workpiece cannot be reached by the robotic welding equipment, therefore, a human welder intervenes (in accordance with the defined sequence of welds) to make those welds that the robotic welding equipment cannot reach.

In accordance with one embodiment, the weld sequence controller 910 is configured to adapt at least one of position (position in the sequence) and timing of a subsequent weld to be made in the sequence of welds, while manufacturing the workpiece, based on a condition of a previous weld made of the sequence of welds. For example, in one embodiment, the weld sequence controller 910 is configured to adapt the sequence of welds, while manufacturing the workpiece, by adding a non-robotic weld (in real time) as a next weld to be made when an immediate previous weld in the sequence of welds is a robotic weld that was missed by the robotic welding equipment. Therefore, the location on the workpiece of the next weld to be made, non-robotically, is the same as the location of the immediate previous weld that was missed. In this way, a human operator (welder) can be instructed by the weld sequence controller 910 to intervene and complete the missed weld.

In accordance with one embodiment, the weld sequence controller 910 is configured to determine if an immediate previous weld made, of the sequence of welds, is defective based on at least one quality parameter of the immediate previous weld made. Furthermore, the weld sequence controller 910 is configured to adapt the sequence of welds, while manufacturing the workpiece, by adding a non-robotic weld (in real time) as a next weld to be made when the immediate previous weld made in the sequence of welds is a robotic weld that was determined to be defective. Therefore, the location on the workpiece of the next weld to be made, non-robotically, is the same as the location of the immediate previous weld. In this way, a human operator (welder) can be instructed by the weld sequence controller 910 to intervene and correct the defective weld.

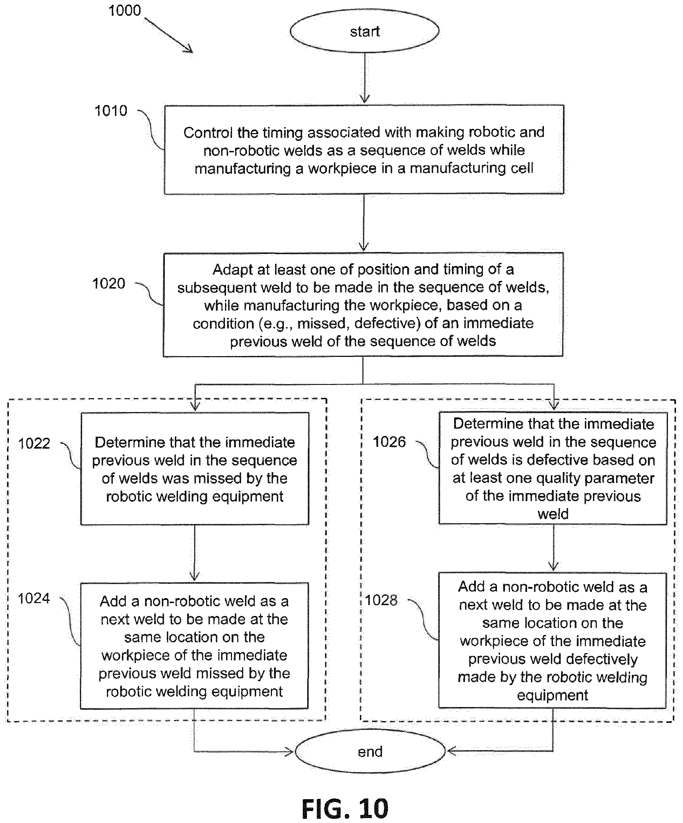

FIG. 10 illustrates a flow chart of one embodiment of a method 1000 to support welding a sequence of welds within a manufacturing cell. The method includes, at block 1010, controlling the timing (e.g., position within the sequence) associated with making robotic and non-robotic welds as a sequence of welds while manufacturing a workpiece in a manufacturing cell. For example, a sequence of welds may include robotic welds to made that are interleaved in time with non-robotic welds to be made, where the timing of the non-robotic welds with respect to the robotic welds is based, at least in part, on the robotic welding equipment not being able to reach certain locations on the workpiece.

At block 1020, at least one of position and timing of a subsequent weld to be made is adapted in the sequence of welds, while manufacturing the workpiece, based on a condition of an immediate previous weld of the sequence of welds. As one example of block 1020, at block 1022, a determination is made as to whether the immediate previous weld in the sequence of welds was missed (a condition) by the robotic welding equipment based on at least one quality parameter of the immediate previous weld. If so, then at block 1024, a non-robotic weld is added to the sequence of welds as a next weld to be made at the same location on the workpiece of the immediate previous weld that was missed by the robotic welding equipment. Thus, the subsequent weld that was going to be made in the un-adapted sequence of welds is pushed out in time and position in the adapted sequence to make room for the added non-robotic weld.

As another example of block 1020, at block 1026, a determination is made as to whether the immediate previous weld in the sequence of welds is defective (a condition) based on at least one quality parameter of the immediate previous weld. If so, then at block 1028, a non-robotic weld is added to the sequence of welds as a next weld to be made at the same location on the workpiece of the immediate previous weld defectively made, for example, by the robotic welding equipment. Again, the subsequent weld that was going to be made in the un-adapted sequence of welds is pushed out in time and position in the adapted sequence to make room for the added non-robotic weld.

In these ways, a weld sequence can be adapted "on-the-fly" while manufacturing a workpiece to allow for the efficient manufacturing of the workpiece within the manufacturing cell. The ability to determine that a weld was "missed" and/or is "defective" is discussed next herein with respect to sensors that detect quality parameters.

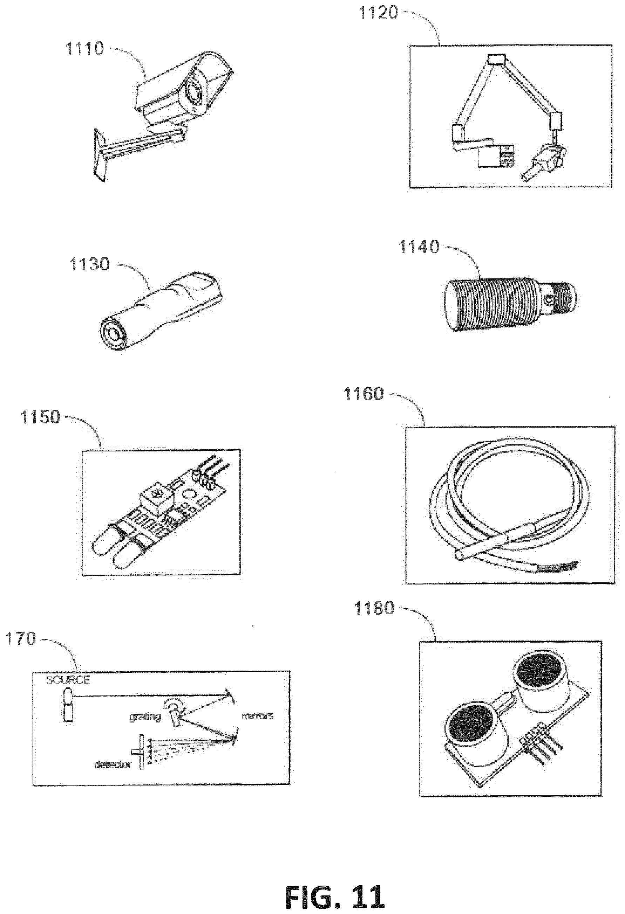

FIG. 11 illustrates example embodiments of sensors (e.g., as sensor 63 of FIG. 1 and FIG. 9) for monitoring quality parameters of a sequence of welds that are made when manufacturing a workpiece within a manufacturing cell. The sensors are configured to observe welds created on the workpiece and report the quality parameters, directly or indirectly, to the weld sequence controller of the manufacturing cell. A quality parameter can be an indication of a missed weld or an indication of the nature of a defective weld (e.g., poor weld penetration).

For example, a sensor for sensing a quality parameter of a weld may be a visual spectrum sensor (e.g., a camera) 1110, a radiographic sensor 1120, a laser sensor 1130, an electromagnetic sensor 1140, an infrared sensor 1150, a temperature sensor 1160, a spectrometer sensor 1170, or an ultrasonic sensor 1180. Other types of sensors are possible as well, in accordance with other embodiments. A quality parameter may be related to, for example, the presence/absence of a weld at a weld position on the workpiece/part, a weld bead size, weld penetration, weld fusion, weld porosity, weld cracking, weld inclusion, a weld discontinuity, an arc plasma type, or an arc plasma temperature. Other quality parameters are possible as well, in accordance with other embodiments. Such sensing can be accomplished on-the-fly in real time during welding, in accordance with one embodiment. Sensor fusion or data fusion techniques may be employed, in accordance with some embodiments, to combine data from two or more sensors to determine the existence of a missed weld or a defective weld.

FIG. 12 illustrates an example embodiment of a controller 1200 (e.g., a central controller 220 or 320, a cell controller 76, or a weld sequence controller 910 used in the systems described herein). The controller 1200 includes at least one processor 1214 which communicates with a number of peripheral devices via bus subsystem 1212. These peripheral devices may include a storage subsystem 1224, including, for example, a memory subsystem 1228 and a file storage subsystem 1226, user interface input devices 1222, user interface output devices 1220, and a network interface subsystem 1216. The input and output devices allow user interaction with the controller 1200. Network interface subsystem 1216 provides an interface to outside networks and is coupled to corresponding interface devices in other computer systems. For example, the cell controller 76 of the manufacturing cell 10 may share one or more characteristics with the controller 1200 and may be, for example, a conventional computer, a digital signal processor, and/or other computing device.

User interface input devices 1222 may include a keyboard, pointing devices such as a mouse, trackball, touchpad, or graphics tablet, a scanner, a touchscreen incorporated into the display, audio input devices such as voice recognition systems, microphones, and/or other types of input devices. In general, use of the term "input device" is intended to include all possible types of devices and ways to input information into the controller 1200 or onto a communication network.

User interface output devices 1220 may include a display subsystem, a printer, a fax machine, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from the controller 1200 to the user or to another machine or computer system.

Storage subsystem 1224 stores programming and data constructs that provide or support some or all of the functionality described herein (e.g., as software modules). For example, the storage subsystem 1224 may include analysis software modules that are used in a central controller to analyze aggregated weld parameter data and generate updated weld settings for welding equipment of manufacturing cells across a manufacturing environment.

Software modules are generally executed by processor 1214 alone or in combination with other processors. Memory 1228 used in the storage subsystem can include a number of memories including a main random access memory (RAM) 1230 for storage of instructions and data during program execution and a read only memory (ROM) 1232 in which fixed instructions are stored. A file storage subsystem 1226 can provide persistent storage for program and data files, and may include a hard disk drive, a floppy disk drive along with associated removable media, a CD-ROM drive, an optical drive, or removable media cartridges. The modules implementing the functionality of certain embodiments may be stored by file storage subsystem 1226 in the storage subsystem 1224, or in other machines accessible by the processor(s) 1214.

Bus subsystem 1212 provides a mechanism for letting the various components and subsystems of the controller 1200 communicate with each other as intended. Although bus subsystem 1212 is shown schematically as a single bus, alternative embodiments of the bus subsystem may use multiple buses.

The controller 1200 can be of varying types including a workstation, server, computing cluster, blade server, server farm, or any other data processing system or computing device. Due to the ever-changing nature of computing devices and networks, the description of the controller 1200 depicted in FIG. 12 is intended only as a specific example for purposes of illustrating some embodiments. Many other configurations of the controller 1200 are possible having more or fewer components than the controller depicted in FIG. 12.

While the disclosed embodiments have been illustrated and described in considerable detail, it is not the intention to restrict or in any way limit the scope of the appended claims to such detail. It is, of course, not possible to describe every conceivable combination of components or methodologies for purposes of describing the various aspects of the subject matter. Therefore, the disclosure is not limited to the specific details or illustrative examples shown and described. Thus, this disclosure is intended to embrace alterations, modifications, and variations that fall within the scope of the appended claims, which satisfy the statutory subject matter requirements of 35 U.S.C. §101. The above description of specific embodiments has been given by way of example. From the disclosure given, those skilled in the art will not only understand the general inventive concepts and attendant advantages, but will also find apparent various changes and modifications to the structures and methods disclosed. It is sought, therefore, to cover all such changes and modifications as fall within the spirit and scope of the general inventive concepts, as defined by the appended claims, and equivalents thereof.

**REFERENCE NUMBERS**

| | | | |
|---|---|---|---|
| | | 210 | manufacturing cell |
| | | 220 | central controller |
| 10 | manufacturing cell | 230 | communication network |
| 12 | frame | 300 | system |
| 14 | robot | 310 | manufacturing cell |
| 16 | welding table | 320 | central controller |
| 18 | welding table | 330 | communication network |
| 22 | work piece | 400 | weld parameter data |
| 24 | work piece | 500 | aggregated weld parameter data |
| 26 | front access door | 510 | weld settings |
| 28 | rear access door | 610 | analysis |
| 32 | window | 620 | analysis |
| 40 | control panel | 630 | analysis |
| 42 | controls enclosure | 710 | voltage sensor |
| 43 | memory | 720 | current sensor |
| 60 | welding gun | 730 | motion sensor |
| 61 | sensor | 740 | speed sensor |
| 62 | conduit | 750 | visual sensor |
| 63 | sensor | 760 | flow sensor |
| 64 | electrode wire | 800 | method |
| 66 | container | 810 | block |
| 68 | wire feeder | 820 | block |
| 72 | power source | 830 | block |
| 74 | platform | 840 | block |
| 76 | cell controller | 900 | manufacturing cell |
| 200 | system | 910 | weld sequence controller |
| 920 | welding gun | 1150 | infrared sensor |
| 930 | conduit | 1160 | temperature sensor |
| 940 | welding wire | 1170 | spectrometer sensor |
| 950 | container | 1180 | ultrasonic sensor |
| 960 | wire feeder | 1200 | controller |
| 1000 | method | 1212 | bus subsystem |
| 1010 | block | 1214 | processor |
| 1020 | block | 1216 | network interface subsystem |
| 1022 | block | 1220 | user interface output device |
| 1024 | block | 1222 | user interface input device |
| 1026 | block | 1224 | storage subsystem |
| 1028 | block | 1226 | file storae subsystem |
| 1110 | visual spectrum sensor | 1228 | memory subsystem |
| 1120 | radiographic sensor | 1230 | random access memory |
| 1130 | laser sensor | 1232 | read only memory |
| 1140 | electromagnetic sensor | | |

## Claims

1. A system (200, 300) supporting weld quality across a manufacturing environment, the system (200, 300) comprising:
a plurality of manufacturing cells (10, 210, 310, 900) within a manufacturing environment, wherein each manufacturing cell (10, 210, 310, 900) of the plurality of manufacturing cells (10, 210, 310, 900) includes a cell controller (76) and welding equipment;
a central controller (220, 320); and
a communication network (230, 330) operatively connected to the central controller (220, 320) and the plurality of manufacturing cells (10, 210, 310) and configured to support data communications between the central controller (220, 320) and the cell controller (76) of each of the plurality of manufacturing cells (10, 210, 310, 900),
wherein the central controller (220, 320) is configured to:
collect actual weld parameter data from the cell controller (76) of each of the plurality of manufacturing cells (10, 210, 310, 900), via the communication network (230, 330), to form aggregated weld parameter data for a same type of workpiece (22, 24) being welded in each of the plurality of manufacturing cells (10, 210, 310, 900), wherein the actual weld parameter data include values and ranges of actual welding parameters used by the welding equipment in each of the plurality of manufacturing cells to weld the same type of workpiece (22, 24),
analyze the aggregated weld parameter data to generate updated weld settings for the same type of workpiece (24) being welded in each of the plurality of manufacturing cells (10, 210, 310, 900), and
communicate the updated weld settings to the cell controller (76) of each of the plurality of manufacturing cells (10, 210, 310, 900) via the communication network (230, 330).

2. The system (200, 300) of claim 1, wherein the welding equipment of each of the plurality of manufacturing cells (10, 210, 310, 900) is configured to:
communicate the actual weld parameter data to the cell controller (76),
receive the updated weld settings from the cell controller (76), and
use the updated weld settings for subsequent welding of the same type of workpiece (22, 24).

3. The system (200, 300) of claim 1 or 2, wherein the actual weld parameter data include values and ranges of at least one of a welding voltage, a welding current, an arc travel speed, a wire feed speed, a wire electrode stick out distance, and a welding waveform.

4. The system (200, 300) of any of the claims 1 to 3, wherein the updated weld settings include values and ranges of at least one of a welding voltage, a welding current, an arc travel speed, a wire feed speed, a wire electrode stick out distance, a gas flow rate, and a welding waveform.

5. The system (200, 300) of any of the claims 1 to 4, wherein at least a portion of the actual weld parameter data is stored in a memory of the welding equipment of each manufacturing cell of the plurality of manufacturing cells (10, 210, 310, 900) as operator-selected weld parameter data.

6. The system (200, 300) of any of the claims 1 to 5, further comprising at least one sensor, in each manufacturing cell of the plurality of manufacturing cells (10, 210, 310, 900), configured to sense at least one of the actual welding parameters used to weld the same type of workpiece, wherein the at least one sensor includes at least one of a voltage sensor (710) configured to sense a welding voltage, a current sensor (720) configured to sense a welding current, a motion sensor (730) configured to sense an arc travel speed, a speed sensor (740) configured to sense a wire feed speed, a visual sensor (750) configured to sense an electrode stick out distance, or a flow sensor (760) configured to sense a gas flow.

7. The system (200, 300) of any of the claims 1 to 6, wherein the plurality of manufacturing cells (10, 210, 310, 900) are robotic manufacturing cells, and/or
wherein the plurality of manufacturing cells are non-robotic manufacturing cells.

8. The system (200, 300) of any of the claim 1 to 7, wherein the communication network (230, 330) is configured to facilitate wired communication between the central controller (220, 320) and each cell controller (76) of the plurality of manufacturing cells (10, 210, 310, 900),
and/or wherein the communication network (230, 330) is configured to facilitate wireless communication between the central controller (220, 320) and each cell controller (76) of the plurality of manufacturing cells (10, 210, 310, 900).

9. A manufacturing cell (10, 210, 310, 900) supporting welding of a sequence of welds to manufacture a workpiece (22, 24), the manufacturing cell (10, 210, 310, 900) comprising:
robotic welding equipment configured to make robotic welds as at least a portion of manufacturing a workpiece (22, 24);
non-robotic welding equipment configured to allow a human operator to make non-robotic welds as at least a portion of manufacturing the workpiece; and
a weld sequence controller (910) configured to control timing associated with making the robotic welds and the non-robotic welds as a sequence of welds to manufacture the workpiece (22, 24).

10. The manufacturing cell (10, 210, 310, 900) of claim 9, wherein the timing and the sequence of welds is predetermined and fixed before welding begins.

11. The manufacturing cell (10, 210, 310, 900) of claim 9 or 10, wherein locations of the non-robotic welds to be made to manufacture the workpiece cannot be reached by the robotic welding equipment.

12. The manufacturing cell (10, 210, 310, 900) of any of the claims 9 to 11, wherein the weld sequence controller (910) is configured to adapt at least one of a position and timing of a subsequent weld to be made in the sequence of welds, while manufacturing the workpiece (22, 24), based on a condition of a previous weld of the sequence of welds,
and/or wherein the weld sequence controller (910) is configured to adapt the sequence of welds, while manufacturing the workpiece (22, 24), by adding a non-robotic weld as a next weld to be made when an immediate previous weld in the sequence of welds is a robotic weld that was missed by the robotic welding equipment, and wherein a location on the workpiece (22, 24) of the next weld to be made, non-robotically, is the same as a location of the immediate previous weld,
and/or wherein the weld sequence controller (910) is configured to determine if an immediate previous weld made, of the sequence of welds, is defective based on at least one quality parameter of the immediate previous weld made,
and/or wherein the weld sequence controller (910) is configured to adapt the sequence of welds, while manufacturing the workpiece (22, 24), by adding a non-robotic weld as a next weld to be made when an immediate previous weld in the sequence of welds is a robotic weld that was determined to be defective, and wherein a location on the workpiece (22, 24) of the next weld to be made, non-robotically, is the same as a location of the immediate previous weld.

13. The manufacturing cell (10, 210, 310, 900) of any of the claims 9 to 12, further comprising at least one sensor associated with the at least one weld of the sequence of welds, wherein the at least one sensor is configured to sense at least one quality parameter associated with generating the at least one weld and report the at least one quality parameter, directly or indirectly, to the weld sequence controller.

14. The manufacturing cell (10, 210, 310, 900) of any of the claims 9 to 13, wherein the at least one sensor includes at least one of a visual spectrum sensor (1110), a radiographic sensor (1120), a laser sensor (1130), an electromagnetic sensor (1140), an infrared sensor (1150), a temperature sensor (1160), a spectrometer sensor (1170), or an ultrasonic sensor (1180).

15. The manufacturing cell (10, 210, 310, 900) of any of the claims 9 to 14, wherein the at least one quality parameter is related to at least one of a weld position on the workpiece (22, 24), a weld bead size, a weld bead shape, weld penetration, weld fusion, weld porosity, weld cracking, weld inclusion, a weld discontinuity, an arc plasma type, or an arc plasma temperature.
